(19) Europäisches Patentamt
European Patent Office
Office européen des brevets

(11) **EP 0 537 316 B1**

(12) **EUROPEAN PATENT SPECIFICATION**

(45) Date of publication and mention
of the grant of the patent:
**17.07.1996 Bulletin 1996/29**

(21) Application number: **92909205.4**

(22) Date of filing: **29.04.1992**

(51) Int Cl.⁶: **G10L 9/10**

(86) International application number:
**PCT/FI92/00128**

(87) International publication number:
**WO 92/20064 (12.11.1992 Gazette 1992/28)**

(54) **SPEAKER RECOGNITION METHOD**

VERFAHREN ZUR SPRECHERERKENNUNG

METHODE DE RECONNAISSANCE DE LA PAROLE

(84) Designated Contracting States:
**AT BE CH DE DK ES FR GB GR IT LI LU MC NL SE**

(30) Priority: **30.04.1991 FI 912088**

(43) Date of publication of application:
**21.04.1993 Bulletin 1993/16**

(73) Proprietor: **NOKIA TELECOMMUNICATIONS OY
FIN-02600 Espoo (FI)**

(72) Inventor: **VÄNSKÄ, Marko
SF-03100 Nummela (FI)**

(74) Representative: **Tomlinson, Kerry John
Frank B. Dehn & Co.
European Patent Attorneys
Imperial House
15-19 Kingsway
London WC2B 6UZ (GB)**

(56) References cited:
**EP-A- 0 287 104        EP-A- 0 347 338
US-A- 5 054 082**

## Description

Field of the Invention

The invention relates to a speaker recognition method, wherein a speaker is recognized by comparing a model calculated on the basis of samples derived from the speaker's speech signal with a stored model of at least one known speaker.

Background of the Invention

One known way of recognizing and verifying a user in various systems, such as computer systems or telephone systems, is to utilize the speech signal. All such speaker recognition systems attempt to find speech parameters for automatically recognizing the speaker and distinguishing different speakers from each other. A sample derived from the speech of each speaker is used to create models containing certain parameters characteristic of the voice, and the models are then stored in the memory of the speaker recognition system. To recognize an anonymous speaker, his speech signal is sampled and a model comprising the same parameters is created from the speech samples and compared with reference models or templates stored in the memory of the system. If the model created from the speech signal to be identified matches with one of the templates of known speakers stored in the memory with sufficient accuracy when applying a predetermined criterion, the anonymous speaker is recognized as the person from whose speech signal the matching template had been created. Generally speaking, this is the main principle in all known speaker recognition systems, whereas the parameters and solutions used for modelling the speaker's voice deviate greatly from each other. Examples of known speaker recognition methods and systems are disclosed in U.S. Patents 4,720,863 and 4,837,830, GB Patent Application 2 169 120 and EP Patent Application 0 369 485.

Disclosure of the Invention

The object of the invention is a speaker recognition method of a new type, in which the speaker is recognized on the basis of an arbitrary speech signal with higher accuracy and with a simpler algorithm than previously.

This is achieved by means of a method of the type described in the introduction, wherein, according to the invention, the averages of the cross-sectional areas or other cross-sectional dimensions of portions of a lossless tube model of a speaker's vocal tract, determined by means of the samples derived from the speech signal, are compared in the comparing step with the corresponding averages of the portions of the stored vocal tract model of at least one known speaker.

The basic idea of the invention is to recognize the speaker on the basis of the vocal tract specific to each speaker. As used in this connection, the vocal tract refers to the passage comprising the human vocal cords, larynx, pharynx, mouth and lips, by means of which the human voice is produced. The profile of the speaker's vocal tract varies continuously in time and the accurate shape of the vocal tract is difficult to determine merely on the basis of information derived from the speech signal, which is due to the complicated interactions between the different parts of the vocal tract and the different composition of the wall material of the vocal tract with different persons. In the method according to the invention, however, an accurate shape of the vocal tract is not needed. In the invention, the speaker's vocal tract is modelled by means of a lossless tube model, the shape of the tube being specific to each speaker. In addition, although the profile of the speaker's vocal tract and thus the lossless tube model varies continuously during speech, the extreme dimensions and average value of the vocal tract and the lossless tube model are constant values specific to each speaker. Therefore the speaker can be recognized in the method according to the invention with reasonable accuracy on the basis of the average shape or shapes of the lossless tube model of the speaker's vocal tract. In one embodiment of the invention the recognition is performed on the basis of the average cross-sectional areas of the cylinder portions of the lossless tube model and the extreme values, that is, the maximum and minimum values of the cross-sectional area of the cylinder portions.

In another embodiment of the invention, the accuracy of the speaker recognition is further improved by defining an average of the lossless tube model for individual sounds. During a certain sound the shape of the vocal tract remains nearly unchanged and represents better the speaker's vocal tract. When several sounds are used in the recognition, a very high accuracy is achieved.

The cross-sectional areas of the cylinder portions of the lossless tube model can be determined easily by means of so-called reflection coefficients produced in conventional speech coding algorithms and systems. It is, of course, also possible to use some other cross-sectional dimension of the lossless tube as a reference parameter, such as the radius or diameter. On the other hand, the cross-section of the tube is not necessarily circular.

Description of the Drawings

In the following the invention will be described in more detail by means of an illustrating embodiment with reference to the attached drawing, in which

Figures 1 and 2 illustrate the modelling of a speaker's vocal tract by means of a lossless tube comprising successive cylinder portions;
Figure 3 shows a flow chart illustrating a speaker recognition method according to the invention;
Figure 4 illustrates changes in the models of the lossless tube during speech; and
Figure 5 shows a block diagram illustrating the recognition of a speaker on a sound level.

Detailed Description of the Invention

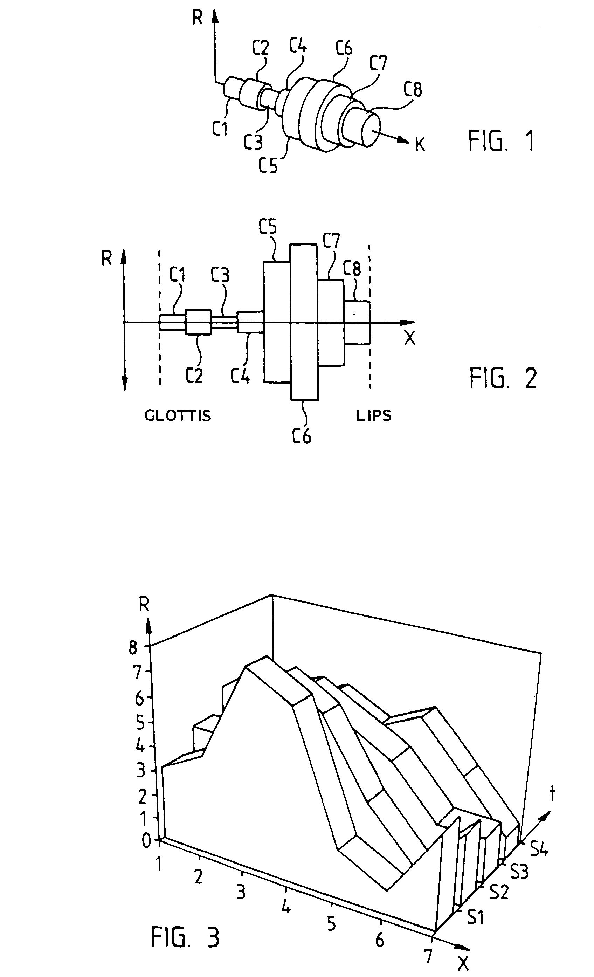

Figure 1 shows a perspective view of a lossless tube model comprising successive cylinder portions C1 - C8 and roughly representing a human vocal tract. In Figure 2, the lossless tube model of Figure 1 is shown from the side. The human vocal tract usually refers to a passage formed by the vocal cords, throat, pharynx and lips, by means of which humans produce speech sounds. In Figures 1 and 2, the cylinder portion C1 represents the shape of a vocal tract section positioned after the glottis, i.e. the opening between the vocal cords; the cylinder portion C8 represents the shape of the vocal tract in the area of the lips; and the cylinder portions C2 - C7 therebetween represent the shape of the discrete vocal tract sections between the glottis and the lips. The shape of the vocal tract typically varies continuously during speech when various sounds are produced. Similarly, the cross-sectional diameters and areas of the discrete cylinders C1 - C8 representing different vocal tract sections vary during speech. The inventor has now discovered that an average vocal tract shape calculated from a relatively great number of instantaneous vocal tract shapes is a speaker specific constant which can be used for the recognition of the speaker. The same applies to the cylinder portions C1 - C8 of the lossless tube model of the vocal tract, i.e., the long-term average cross-sectional areas of the cylinder portions C1 - C8 calculated from the instantaneous values of the cross-sectional areas of the cylinders portions C1 - C8 are constants with a relatively high accuracy. Furthermore, the extreme values of the cross-sectional dimensions of the cylinders of the lossless tube model are determined by the extreme dimensions of the actual vocal tract and are thus speaker specific, relatively accurate constants.

The method according to the invention utilizes so-called reflection coefficients, i.e. PARCOR coefficients $r_k$ obtained as a provisional result in the Linear Predictive Coding (LPC) well-known in the art, These coefficients have a certain connection with the shape and structure of the vocal tract. The connection between the reflection coefficients $r_k$ and the areas $A_k$ of the cylinder portions $C_k$ of the lossless tube model of the vocal tract is described by Equation (1)

$$-r(k) = \frac{A(k+1) - A(k)}{A(k+1) + A(k)} \tag{1}$$

where k = 1, 2, 3, ...

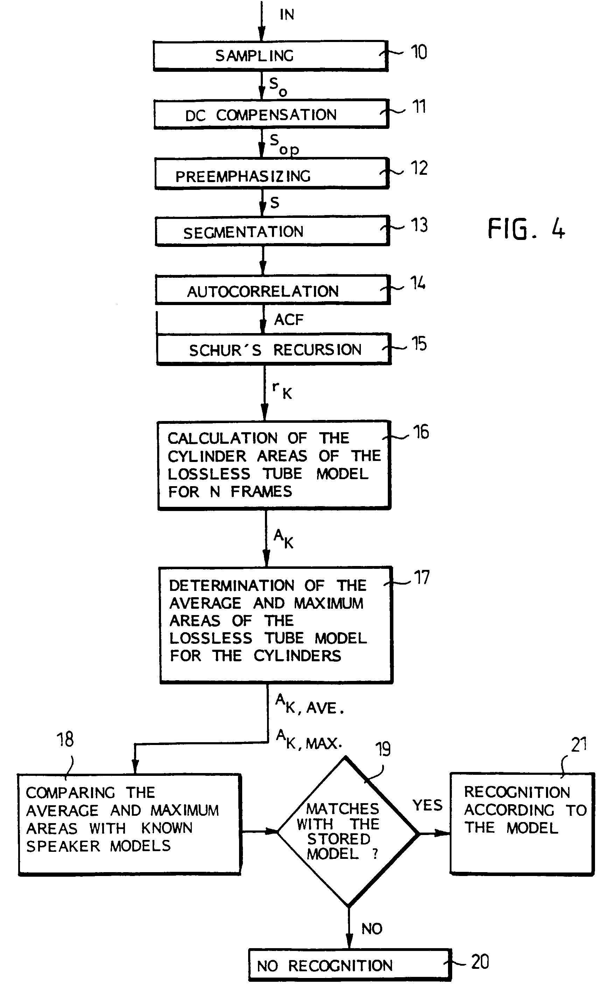

The LPC analysis producing the reflection coefficients used in the invention is utilized in many known speech coding methods. One advantageous application of the method according to the invention is expected to be found in the recognition of subscribers in mobile radio systems, especially in the Pan-European digital mobile radio system GSM. The GSM specification 06.10 defines very accurately the Regular Pulse Excitation - Long Term Prediction (RPE - LTP) speech coding method used in the system. The use of the method according to the invention in connection with this speech coding method is advantageous as the reflection coefficients needed in the invention are obtained as a provisional result in the above-mentioned RPE-LPC coding method. In the preferred embodiment of the invention all method steps up to the calculation of the reflection coefficients and the devices embodying said steps follow the speech coding algorithm complying with the GSM specification 06.10. In the following these method steps will be described only generally in so far as is necessary for the understanding of the invention with reference to the flow chart of Figure 4.

In Figure 4, an input signal IN is sampled in block 10 at a sampling frequency 8 kHz, and an 8-bit sample sequence $s_0$ is formed. When the input signal IN is an analog speech signal, the block 10 may be embodied by means of a conventional analog-digital converter circuit used in the telecommunication devices to digitize speech. When the input signal IN is a digital signal, e.g. PCM, the block 10 may be a digital input buffer synchronized with the signal IN. In block 11 the DC component is extracted from the samples so as to eliminate an interfering side tone possibly occurring in coding. The block 11 may be embodied by a digital lowpass filter. Thereafter the sample signal is pre-emphasized in block 12 by weighting high signal frequencies by a digital first-order FIR filter. In block 13 the samples are segmented into frames of 160 samples, the duration of each frame being about 20 ms.

In block 14 the spectrum of the speech signal is modelled by performing an LPC analysis on each frame by an auto-correlation method with an eight-order auto-correlation function. p + 1 values of the auto-correlation function ACF are thereby calculated from the frame

$$ACF(k) = \sum_{i=1}^{160} s(i)s(i-k) \qquad (2)$$

wherein $k = 0, 1, ...,8$.

In place of the auto-correlation function, it is possible to use any other suitable function, such as a co-variance function. The values of eight reflection coefficients $r_k$ of a short-term analysis filter used in the speech coder are calculated from the obtained values of the auto-correlation function by Schur's recursion, defined in the GSM specification 06.10, or any other suitable recursion method. Schur's recursion produces new reflection coefficients every 20th ms. In the preferred embodiment of the invention the coefficients comprise 16 bits and their number is 8. By applying Schur's recursion for an extended period of time, the number of the reflection coefficients can be increased, if desired.

The reflection coefficients (PARCOR) may also be determined in a manner and by means of an apparatus described in U.S. Patent 4,837,830.

In block 16, a cross-secti nal area $A_k$ of each cylinder portion $C_k$ of the lossless tube model of the vocal tract of the speaker is calculated and stored in a memory device on the basis of the reflection coefficients $r_k$ calculated from each frame. As Schur's recursion produces a new set of reflection coefficients every 20th ms, there will be 50 area values per second for each cylinder portion $C_k$. In block 17, after the cylinder areas of the lossless tube model have been calculated for N frames in block 16, the average values $A_{k,ave}$ for the areas of the cylinder portions $C_k$ of the N lossless tube models stored in the memory are calculated, and the maximum cross-sectional area $A_{k,max}$ which occurred during said N frames for each cylinder portion $C_k$ is determined. In block 18, the obtained average areas $A_{k,ave}$ and the maximum areas $A_{k,max}$ of the cylinder portions of the lossless tube model of the speaker's vocal tract are then compared with the average and maximum areas of the predetermined lossless tube model of at least one known speaker. If the comparison of the parameters shows that the calculated average shape of the lossless tube matches with one of the predetermined models stored in the memory, the decision block 19 is followed by block 21, in which it is confirmed that the analyzed speaker is the person represented by this model (positive recognition). If the calculated parameters do not correspond to or match with the corresponding parameters of any one of the predetermined models stored in the memory, the decision block 19 is followed by block 20, in which it is showed that the speaker is unknown (negative recognition).

In a mobile radio system, for instance, the block 21 may allow a connection establishment or the use of a specific service, while the block 20 prevents these procedures. The block 21 may include a generation of a signal indicating a positive recognition.

New models can be calculated and stored in the memory for recognition by a procedure substantially similar to that shown in the flow chart of Figure 3 except that after the average and maximum areas have been calculated in block 18, the calculated area data are stored in the memory of the recognition system as speaker specific files together with other required personal identification data, such as name, telephone number, etc.

In another embodiment of the invention, the analysis used in the recognition is performed on the level of sounds, so that the averages of the cross-sectional areas of the cylinder portions of the lossless tube model of the vocal tract are calculated from the speech signal under analysis from the areas of the cylinder portions of the instantaneous lossless tube models created during a predetermined sound. The duration of one sound is rather long, so that several, even tens of consecutive models can be calculated from a single sound present in the speech signal. This is illustrated in Figure 3 which shows four consecutive instantaneous lossless tube models S1 - S4. As appears clearly from Figure 3 the radii (and cross-sectional areas) of the individual cylinders of the lossless tube vary in time. For instance, the instantaneous models S1, S2 and S3 could be roughly classified to have been created during the same sound, so that their average could be calculated. Instead, the model S4 is different and associated with a different sound and therefore it is not taken into account in the averaging.

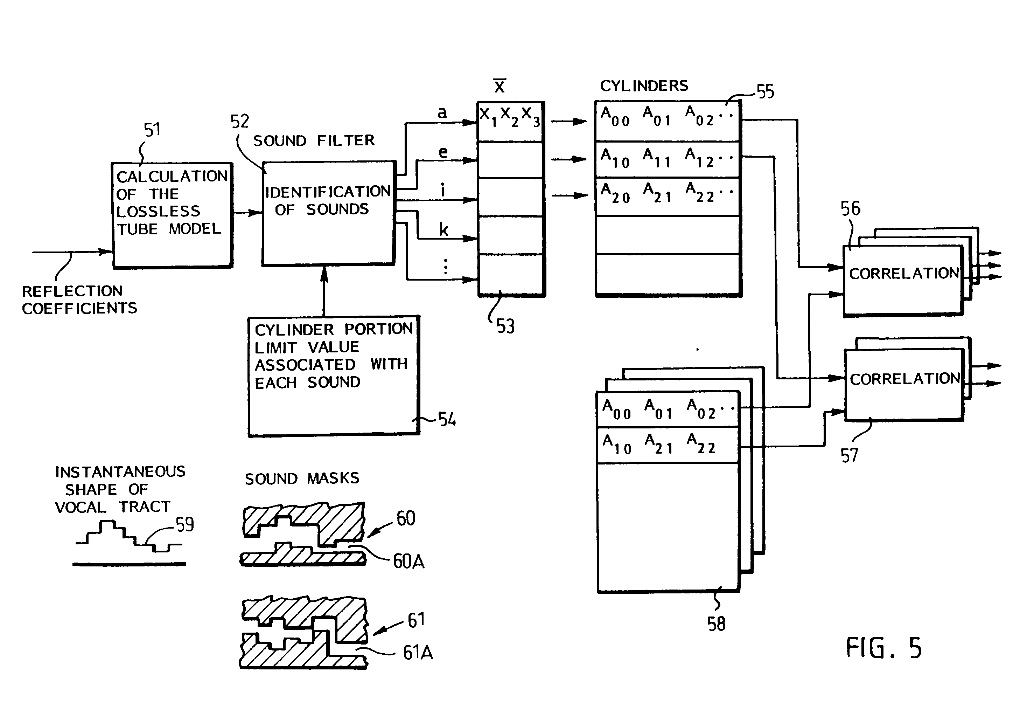

In the following the recognition by means of the sound level will be described with reference to the block diagram of Figure 5. Even though the recognition can be made by means of a single sound, it is preferable to use at least two different sounds in the recognition, e.g., a vowel and/or a consonant. The predetermined lossless tube models of a known speaker corresponding to these sounds constitute a so-called combination table 58 stored in the memory. A simple combination table may comprise e.g. the average areas of the cylinders of the lossless tube models calculated for three sounds "a", "e" and "i", that is, three different average lossless tube models. This combination table is stored in the memory within the above-mentioned speaker specific file. When the instantaneous lossless tube model calculated (block 51) from the sampled speech of an unknown speaker to be recognized by means of the reflection coefficients is detected ("quantized") roughly to correspond one of the predetermined models (block 52), it is stored in the memory (block 53) for subsequent averaging. When a sufficient number N of instantaneous lossless tube models have been obtained for each sound, the averages $A_{ij}$ of the cross-sectional areas of the cylinder portions of the lossless tube model are calculated separately for each sound (block 55). The averages $A_{ij}$ are then compared with the cross-sectional areas $A_{ij}$ of the cylinders of the corresponding models stored in the combination table 58. Each model of the combination table 58 has its own reference function 56 and 57, such as a cross-correlation function, by means of which the correspondence or correlation between the model calculated from the speech and the stored model of the combination table 58 is evaluated. The unknown speaker is recognized if there is a sufficiently accurate correlation between the models calculated for all sounds or a sufficient number of sounds and the stored models.

The instantaneous lossless tube model 59 created from the sampled speech signal can be detected in block 52 to correspond to a certain sound if the cross-sectional dimension of each cylinder portion of the instantaneous lossless tube model 59 is within the predetermined stored limit values of the corresponding sound of the known speaker. These sound specific and cylinder specific limit values are stored in a so-called quantization table 54 in the memory. In Figure 5, the reference numerals 60 and 61 show how said sound and cylinder specific limit values create a mask or model for each sound, within the allowed area 60A and 61A (unshadowed areas) of which the instantaneous vocal tract model 59 to be identified has to fall. In Figure 5, the instantaneous vocal tract model 59 can be fitted within the sound mask 60 whereas it is obvious that it cannot be fitted within the sound mask 61. The block 52 thus acts as a kind of sound filter, which classifies the vocal tract models into the respective sound groups a, e, i, etc.

The method can be embodied e.g. by software in a conventional signal processor system having at least an ROM or EEPROM memory for storing the software, an RAM type work memory, and an interface for the input signal IN or the speech digitizer 10. The predetermined models and other predetermined recognition parameters may also be stored in a nonvolatile memory, such as EEPROM. The method can also be embodied as software in the apparatus disclosed in U.S. Patent 4,837,830.

The figures and the description related to them are only intended to illustrate the present invention. In its details, the method according to the invention may vary within the scope of the attached claims.

## Claims

1. A speaker recognition method, wherein a speaker is recognized by comparing a model calculated on the basis of samples derived from the speaker's speech signal with a stored model of at least one known speaker, **characterized** in that the averages of the cross-sectional areas or other cross-sectional dimensions of portions of a lossless tube model of the speaker's vocal tract, determined by means of the samples derived from the speech signal, are compared in said comparing step with the corresponding averages of the portions of the stored vocal tract model of at least one known speaker.

2. A method according to claim 1, comprising

   a) grouping the samples derived from the speech signal into frames containing M samples;
   b) calculating the values of a predetermined auto-correlation function or a corresponding function from the samples of the frames;
   c) calculating reflection coefficients recursively from the values of the auto-correlation function or the like;
   d) comparing parameters calculated by means of the reflection coefficients with corresponding stored parameters of at least one known speaker;

   **characterized** in that step d) comprises

   calculating the area of each cylinder portion of the lossless tube model of the vocal tract by cylinder portions on the basis of the reflection coefficients of the frame;
   repeating the calculation of said areas in N frames and calculating the average of the obtained areas separately for each cylinder portion; and
   comparing the calculated average areas with the average areas of the cylinder portions of the stored model of at least one known speaker.

3. A method according to claim 1 or 2, **characterized** in that the extreme value of the area of each cylinder portion is determined during N frames, and the average and maximum areas of the cylinder portions are compared with the average and maximum areas of the cylinder portions of the stored vocal tract model of at least one known speaker.

4. A method according to claim 1, 2 or 3, **characterized** in that the average cross-sectional dimensions of the cylinder portions of the lossless tube model of the vocal tract are formed by the averages of the cross-sectional dimensions of the cylinder portions of instantaneous lossless tube models created during a predetermined sound.

5. A method according to claim 4, **characterized** in that

 the averages of the cross-sectional dimensions of the cylinder portions of the lossless tube model are calculated separately for at least two different sounds;
 the averages of the cylinder portions of the lossless tube model of each sound are compared with the cross-sectional dimensions of the cylinder portions of the stored lossless tube model of the known speaker's respective sound; and
 the speaker is recognized if the calculated lossless tube model of a sufficient number of sounds correlates accurately enough with the respective stored lossless tube model.

6. A method according to claim 4 or 5, **characterized** in that the instantaneous lossless tube model created from the sampled speech signal is detected to correspond to a predetermined sound if the cross-sectional dimension of each portion of the instantaneous lossless tube model falls within the predetermined limit values of the respective sound stored in a quantization table.

7. A method according to claim 4, 5 or 6, **characterized** in that said sounds are vowels and/or consonants.

**Patentansprüche**

1. Verfahren zum Erkennen eines Sprechers, wobei ein Sprecher erkannt wird durch Vergleichen eines Modells, das auf der Basis von Abtastwerten berechnet wird, welche aus dem Sprachsignal des Sprechers abgeleitet sind, mit einem gespeicherten Modell von mindestens einem bekannten Sprecher,
dadurch gekennzeichnet,
daß die Mittelwerte der Querschnittsflächen oder von anderen Querschnittsdimensionen von Bereichen eines verlustfreien Rohrmodells des Stimmtraktes des Sprechers, die unter Verwendung der Abtastwerte bestimmt werden, welche aus dem Sprachsignal abgeleitet sind, bei dem Vergleichsschritt mit den entsprechenden Mittelwerten der Bereiche des gespeicherten Stimmtraktmodells von mindestens einem bekannten Sprecher verglichen werden.

2. Verfahren nach Anspruch 1, umfassend die folgenden Schritte:

 a) Gruppieren der Abtastwerte, die aus dem Sprachsignal abgeleitet sind, in Rahmen, welche $\underline{M}$ Abtastwerte enthalten;
 b) Berechnen der Werte einer vorbestimmten Auto-Korrelationsfunktion oder einer entsprechenden Funktion aus den Abtastwerten der Rahmen;
 c) rekursives Berechnen von Reflexionskoeffizienten aus den Werten der Auto-Korrelationsfunktion oder dergleichen; und
 d) Vergleichen von Parametern, die mittels der Reflexionskoeffizienten berechnet worden sind, mit entsprechenden gespeicherten Parametern von mindestens einem bekannten Sprecher,

dadurch gekennzeichnet,
daß der Schritt d) folgendes umfaßt:

- Berechnen der Fläche von jedem Zylinderbereich des verlustfreien Rohrmodells des Stimmtraktes aus Zylinderbereichen auf der Basis der Reflexionskoeffizienten des Rahmens;
- Wiederholen der Berechnung der Flächen in $\underline{N}$ Rahmen und Berechnen des Mittelwertes der erhaltenen Flächen separat für jeden Zylinderbereich; und
- Vergleichen der berechneten Mittelwertflächen mit den Mittelwertflächen der Zylinderbereiche des gespeicherten Modells von mindestens einem bekannten Sprecher.

3. Verfahren nach Anspruch 1 oder 2,
dadurch gekennzeichnet,
daß der Extremwert der Fläche jedes Zylinderbereiches während der $\underline{N}$ Rahmen bestimmt wird und die Mittelwertflächen und die maximalen Flächen der Zylinderbereiche mit den Mittelwertflächen und maximalen Flächen der Zylinderbereiche des gespeicherten Stimmtraktmodells von mindestens einem bekannten Sprecher verglichen werden.

4. Verfahren nach Anspruch 1, 2 oder 3,
dadurch gekennzeichnet,
daß die Mittelwert-Querschnittsdimensionen der Zylinderbereiche des verlustfreien Rohrmodells des Stimmtraktes gebildet werden durch die Mittelwerte der Querschnittsdimensionen der Zylinderbereiche von momentanen verlustfreien Rohrmodellen, die während eines vorgegebenen Geräusches erzeugt werden.

5. Verfahren nach Anspruch 4,
dadurch gekennzeichnet,
daß die Mittelwerte der Querschnittsdimensionen der Zylinderbereiche des verlustfreien Rohrmodells separat für mindestens zwei verschiedene Geräusche berechnet werden; daß die Mittelwerte der Zylinderbereiche des verlust freien Rohrmodells für jedes Geräusch mit den Querschnittsdimensionen der Zylinderbereiche des gespeicherten verlustfreien Rohrmodells des jeweiligen Geräusches des bekannten Sprechers verglichen werden; und daß der Sprecher erkannt wird, wenn das berechnete verlustfreie Rohrmodell von einer ausreichenden Anzahl von Geräuschen eine genaue Korrelation mit dem jeweiligen gespeicherten verlustfreien Rohrmodell zeigt.

6. Verfahren nach Anspruch 4 oder 5,
dadurch gekennzeichnet,
daß das momentane verlustfreie Rohrmodell, das aus dem abgetasteten Sprachsignal erzeugt wird, abgetastet wird, ob es einem vorgegebenen Geräusch entspricht, wenn die Querschnittsdimension von jedem Bereich des momentanen verlustfreien Rohrmodells in den Bereich der vorgegebenen Grenzwerte des jeweiligen Geräusches fällt, die in einer Quantisierungstabelle gespeichert sind.

7. Verfahren nach Anspruch 4, 5 oder 6,
dadurch gekennzeichnet,
daß die Geräusche Vokale und/oder Konsonanten sind.


**Revendications**

1. Procédé de reconnaissance d'un interlocuteur dans lequel un interlocuteur est reconnu en comparant un modèle calculé sur la base d'échantillons dérivés du signal de parole de l'interlocuteur à un modèle stocké d'au moins un interlocuteur connu,
caractérisé en ce que les moyennes des surfaces de coupe transversale, ou d'autres dimensions de coupe transversale, de portions d'un modèle de tube sans pertes de l'appareil vocal de l'interlocuteur, déterminées au moyen d'échantillons dérivés du signal de parole, sont comparées, au cours de ladite étape de comparaison, aux moyennes correspondantes des portions du modèle d'appareil vocal d'au moins un interlocuteur connu.

2. Procédé selon la revendication 1, comprenant :

   a) le groupement des échantillons dérivés du signal de parole en trames contenant M échantillons,
   b) le calcul des valeurs d'une fonction d'autocorrélation prédéterminée à partir des échantillons des trames,
   c) le calcul de manière recurrente de coefficients de réflexion à partir des valeurs de la fonction d'autocorrélation ou analogue,
   d) la comparaison de paramètres calculés au moyen des coefficients de réflexion à des paramètres stockés correspondants d'au moins un interlocuteur connu,

   caractérisé en ce que l'étape d) comprend :

   - le calcul de la surface de chaque portion cylindrique du modèle de tube sans pertes du système vocal par portions cylindriques sur la base des coefficients de réflexion de la trame,
   - la répétition du calcul de ces surfaces pour N trames, et le calcul de la moyenne des surfaces obtenues, séparément pour chaque portion cylindrique, et
   - la comparaison des surfaces moyennes calculées à des surfaces moyennes des portions cylindriques du modèle stocké d'au moins un interlocuteur connu.

3. Procédé selon la revendication 1 ou 2,

caractérisé en ce que la valeur extrême de la surface de chaque portion cylindrique est déterminée au cours de N trames, et que les surfaces moyennes et maximales des portions cylindriques sont comparées aux surfaces moyennes et maximales des portions cylindriques du modèle d'appareil vocal stocké d'au moins un interlocuteur connu.

4. Procédé selon la revendication 1, 2 ou 3,
caractérisé en ce que les dimensions moyennes de coupe transversale des portions cylindriques du modèle de tube sans pertes d'appareils vocaux sont constituées par les moyennes des dimensions en coupe transversale des portions cylindriques de modèles instantanés de tubes sans pertes créés au cours d'un son prédéterminé.

5. Procédé selon la revendication 4,
caractérisé en ce que :

- les moyennes des dimensions en coupe transversale des portions cylindriques du modèle de tube sans pertes sont calculées séparément pour au moins deux sons différents,
- les moyennes des portions cylindriques du modèle de tube sans pertes de chaque son sont comparées aux dimensions en coupe transversale des portions cylindriques du modèle de tube sans pertes stocké du son respectif de l'interlocuteur connu, et
- l'interlocuteur est reconnu si le modèle de tube sans pertes calculé à partir d'un nombre suffisant de sons est en corrélation suffisamment étroite avec le modèle respectif de tube sans pertes.

6. Procédé selon la revendication 4 ou 5,
caractérisé en ce qu'on détecte que le modèle instantané de tube sans pertes créé à partir du signal de discours échantillonné correspond à un son prédéterminé lorsque les dimensions en coupe transversale de chaque portion du modèle instantané de tube sans pertes se situent dans des valeurs limites prédéterminées du son respectif stocké dans une table de quantification.

7. Procédé selon la revendication 4, 5 ou 6, caractérisé en ce que lesdits sons sont des voyelles et/ou des consonnes.

FIG. 1

FIG. 2

GLOTTIS          LIPS

FIG. 3

IN

| SAMPLING | 10 |

$S_o$

| DC COMPENSATION | 11 |

$S_{op}$

| PREEMPHASIZING | 12 |

S

| SEGMENTATION | 13 |

FIG. 4

| AUTOCORRELATION | 14 |

ACF

| SCHUR'S RECURSION | 15 |

$r_K$

| CALCULATION OF THE CYLINDER AREAS OF THE LOSSLESS TUBE MODEL FOR N FRAMES | 16 |

$A_K$

| DETERMINATION OF THE AVERAGE AND MAXIMUM AREAS OF THE LOSSLESS TUBE MODEL FOR THE CYLINDERS | 17 |

$A_{K,AVE.}$

$A_{K,MAX.}$

18

| COMPARING THE AVERAGE AND MAXIMUM AREAS WITH KNOWN SPEAKER MODELS |

19

MATCHES WITH THE STORED MODEL ?

YES

21

| RECOGNITION ACCORDING TO THE MODEL |

NO

| NO RECOGNITION | 20 |

FIG. 5